# EUROPÄISCHE PATENTANMELDUNG

(11) **EP 3 239 077 A1**
(43) Veröffentlichungstag der Anmeldung: **01.11.2017**
(21) Anmeldenummer: 16167736.4
(22) Anmeldetag: 29.04.2016
(51) Int. Cl.: B65G 43/10, B29C 49/42

(54) **VORRICHTUNG ZUM BESCHICKEN EINER WEITERVERARBEITUNGSANLAGE MIT ALS SCHÜTTGUT ANFALLENDEN GEGENSTÄNDEN**

(71) Anmelder: M. Tanner AG, 8308 Illnau (CH)
(72) Erfinder: Tanner, Marcel, 8303 Bassersdorf (CH)
(74) Vertreter: Schaad, Balass, Menzl & Partner AG

(57) **Zusammenfassung**

Dem Silo (26) sind mittels einer Schüttgut-Zuführvorrichtung (14) Gegenstände, wie beispielsweise Vorformlinge zur Herstellung von PET-Flaschen, als Schüttgut zuführbar. Der Füllstandniveausensor (72) des Silos (26) ist mit der Steuereinrichtung (60) verbunden. Diese steuert in Abhängigkeit des ermittelten Füllstands des Silos (26) den Zuführantrieb (26) an, um den Silo (26) mit Gegenständen nachzufüllen. Dem Silo (26) ist ein Hochförderer (34) und diesem eine Vereinzelungsanlage (42) nachgeschaltet. Sowohl der Hochförderer (34) als auch die Vereinzelungsanlage (42) weisen Sensoren (62) und Antriebe (40, 48) auf, wobei alle Sensoren (62) mit der Steuereinrichtung (60) verbunden sind und diese sämtliche Antriebe (26, 40, 48) steuert.

## Beschreibung

Die vorliegende Erfindung betrifft eine Vorrichtung zum Beschicken einer Weiterverarbeitungsanlage mit als Stückgut anfallenden Gegenständen.

Vorrichtungen dieser Art sind allgemein bekannt und werden insbesondere zum Beschicken von Streckblasmaschinen mit Vorformlingen zur Produktion von PET-Flaschen oder zum Beschicken von Inspektionsmaschinen mit von ihnen zu inspizierenden Gegenständen verwendet.

Aus dem Dokument WO 2012/126129 A1 ist eine als Kippvorrichtung mit eingener Steuereinrichtung ausgebildete Zuführvorrichtung bekannt, welche als Schüttgut angelieferte Gegenstände, wie Vorformlinge für Hohlkörper, einem Silo zu dessen Nachfüllung zuführt. Mit einem einen Zuführantrieb bildenden Kippantrieb ist eine Steuereinrichtung verbunden, welche insbesondere dazu dient, den Füllstand des Silos festzustellen und bei Bedarf über die Kippvorrichtung Gegenstände bzw. Vorformlinge in den Silo nachzufüllen.

Eine Fördereinrichtung dient dazu, Gegenstände bzw. Vorformling aus dem Silo zu entnehmen und mittels eines Transportbandes auf eine höhere Ebene zu fördern. Es handelt sich dabei um einen Höhenförderer, welcher die Gegenstände bzw. Vorformlinge zu einem Übergabebereich bringt. Von diesem Übergabebereich werden die Gegenstände bzw. Vorformlinge an eine Vereinzelungsanlage übergeben, welche in bekannter Weise dazu dient, die Gegenstände bzw.

Vorformlinge richtig zu positionieren und in einer Reihe anzuordnen.

In den bekannten Vorrichtungen zum Beschicken der Weiterverarbeitungsanlage mit als Schüttgut anfallenden Gegenständen sind regelmässig zur Steuereinrichtung der Zuführvorrichtung weitere Steuereinrichtungen vorhanden, so beispielsweise für die Fördereinrichtung und die Vereinzelungsanlage.

Auch Vereinzelungsanlagen sind allgemein bekannt, so offenbart beispielsweise das Dokument EP 2 441 708 A1 eine Vorrichtung und ein Verfahren zum Ausrichten von Gegenständen, insbesondere von Vorformlingen zur Herstellung von Kunststoffbehältern. Die Vorformlinge werden über eine Fördereinrichtung an die Eingangsseite einer Ausrichtstrecke übergeben. Weiter ist die Vorrichtung mit einer Ausschleuseinrichtung versehen, die über einen Rückförderer nicht-ausgerichtete Vorformlinge rückführt, vorzugsweise direkt zur Eingangsseite der Ausrichtstrecke.

Auch aus den Dokumenten WO 2010/006461 A1, WO 2010/006462 A1 und WO 2011/069268 A1 sind Vereinzelungsanlagen mit Ausschleuseinrichtungen bekannt.

Die bekannten Vorrichtungen zum Beschicken einer Weiterverarbeitungsanlage mit als Schüttgut anfallenden Gegenständen benötigen sehr viel Raum und sind steuerungsmässig aufwändig.

Es ist deshalb eine Aufgabe der vorliegenden Erfindung, eine gattungsgemässe Vorrichtung derart weiterzubilden, dass sie mit einer einfacheren Steuerung kompakt ausgeführt werden kann.

Diese Aufgabe wird mit einer Vorrichtung zum Beschicken einer Weiterverarbeitungsanlage mit als Schüttgut anfallenden Gegenständen mit den Merkmalen des Anspruchs 1 gelöst.

Die Vorrichtung weist eine Schüttgut-Zuführvorrichtung mit einem Zuführantrieb und einen Silo auf. Diesem sind mittels der Schüttgut-Zuführvorrichtung als Schüttgut angelieferte Gegenstände, wie Vorformlinge für die Herstellung von PET-Flaschen, Becher für die Herstellung von Kaffeekapseln oder andere Behälter oder Hohlkörper, zur Zwischenspeicherung zuführbar. Eine Steuereinrichtung steuert den Zuführantrieb an, um den Silo mit Gegenständen nachzufüllen; dies mindestens in einem Automatikbetrieb.

Dem Silo ist eine einen Förderantrieb aufweisende Fördereinrichtung, insbesondere ein Hochförderer, und dieser eine einen Vereinzelungsantrieb aufweisende Vereinzelungsanlage nachgeschaltet.

Die Fördereinrichtung ist dazu bestimmt, dem Silo Gegenstände zu entnehmen bzw. vom Silo ihm zugeführte Gegenstände aufzunehmen und ungeordnet der Vereinzelungsanlage zuzuführen. Ungeordnet heisst, dass die Gegenstände eine beliebige Ausrichtung aufweisen und mit einer unterschiedlichen Anzahl pro Zeiteinheit gefördert werden können.

Die Vereinzelungsanlage richtet die ihr zugeführten Gegenstände aus, so dass sie in gewünschter Orientierung und bevorzugt in einer Reihe hintereinander in Richtung zur Weiterverarbeitungsanlage weiter gefördert werden können.

Sowohl die Fördereinrichtung als auch die Vereinzelungsanlage weisen Sensoren auf, welche mit der Steuereinrichtung verbunden sind; die Steuereinrichtung steuert in Abhängigkeit von den Signalen dieser Sensoren auch den Förderantrieb und den Vereinzelungsantrieb.

Die erfindungsgemässe Vorrichtung weist somit eine einzige Steuereinrichtung auf, an welche die Sensoren ihre Signale abgeben und welche die Antriebe in Abhängigkeit von Signalen dieser Sensoren ansteuert. Sensoren können auch durch Schalter gebildet sein, welche die Funktion eines Sensors ausüben.

Bevorzugt weist die Steuereinrichtung eine einzige programmierbare Steuerung auf, welche die gesamte Vorrichtung steuert.

Vorzugsweise ist dem Silo ein Füllstandniveausensor zugeordnet, welcher mit einer Steuereinrichtung verbunden ist. In Abhängigkeit des mit dem Füllstandniveausensor ermittelten Füllstandes des Silos steuert - mindestens im Automatikbetrieb - die Steuereinrichtung den Zuführantrieb an, um den Silo mit Gegenständen nachzufüllen.

Der Silo kann als sogenannter Silorucksack ausgebildet sein. Er kann jedoch auch als sogenanntes Siloband ausgebildet sein, wobei er einen Silobehälter und ein Siloförderband aufweist. Dieses ist mittels eines von der Steuereinrichtung gesteuerten Bandantriebs angetrieben. Vom Silobehälter werden dem Siloförderband Gegenstände zugeführt bzw. entnimmt es diese dem Silobehälter und fördert sie zur Fördereinrichtung.

Die Fördereinrichtung ist bevorzugt als Hochförderer ausgebildet.

Bevorzugt weist die Fördereinrichtung in ihrem stromaufwärts liegenden Anfangsbereich einen Übernahmetrichter auf, in welchen die vom Silo angelieferten Gegenstände fallen.

Bevorzugt weist die Fördereinrichtung im Anfangsbereich einen, gegebenenfalls dem Übernahmetrichter zugeordneten, mit der Steuereinrichtung verbundenen Überfüllsensor auf. Stellt der Überfüllsensor ein Überfüllen mit Gegenständen im Anfangsbereich fest, gibt er ein Überfüllsignal an die Steuereinrichtung ab, welche den Bandantrieb beziehungsweise die Zuführung von Gegenständen aus dem Silo stoppt, um ein weiteres Zuführen von Gegenständen zu verhindern, bis der Überfüllsensor feststellt, dass das Überfüllniveau infolge des Weiterförderns von Gegenständen durch die Fördereinrichtung wieder unterschritten ist. Ein entsprechendes Signal des Überfüllsensors an die Steuereinrichtung veranlasst diese, den Bandantrieb beziehungsweise die Zuführung von Gegenständen aus dem Silo wieder in Gang zu setzen.

Bevorzugt weist die Vereinzelungsanlage in ihrem Einlassbereich einen Fördertrichter auf, in welchen die Fördereinrichtung die Gegenstände abgibt.

Bevorzugt weist die Vereinzelungsanlage in ihrem Einlassbereich einen Überfüllungssensor auf, welcher gegebenenfalls dem Fördertrichter zugeordnet ist. Erkennt der Überfüllungssensor das Erreichen eines vorbestimmten Überfüllniveaus, gibt er ein Überfüllungssignal an die Steuereinrichtung ab, welche den Förderantrieb stoppt. Gegebenenfalls wird auch der Bandantrieb des Siloförderbandes gestoppt.

Erkennt der Überfüllungssensor ein Unterschreiten des Überfüllniveaus oder eines vorbestimmten Wiederauffüllniveaus, gibt er ein entsprechendes Signal an die Steuereinrichtung ab, so dass diese den Förderantrieb und gegebenenfalls den Bandantrieb wieder in Gang setzen kann.

Die Schüttgut-Zuführvorrichtung ist bevorzugt als Kippvorrichtung ausgebildet, wie dies aus dem Dokument WO 2012/126129 A1 bekannt ist. Der dort offenbarte Silo zur Zwischenspeicherung weist eine abhebbare Abdeckung auf, welche mittels eines mechanischen Verbindungs- und Kraftübertragungselements der Kippvorrichtung vom Silo zum Nachfüllen anhebbar ist.

Im Zusammenhang mit der vorliegenden Erfindung kann eine derartige Abdeckung vorhanden sein, muss jedoch nicht.

Die Kippvorrichtung weist einen an einem Gestell schwenkbar gelagerten Kipperteil auf, welcher mittels eines als Kippantrieb ausgeführten Zuführantriebs von der Steuereinrichtung gesteuert in einem Arbeitsbereich zwischen einer unteren Ladeposition und einer oberen Entladeposition hin- und her schwenkbar ist.

Der Ladeposition und der Entladeposition ist je ein mit der Steuereinrichtung verbundener, einen Sensor bildender Positionsschalter zugeordnet, welcher an die Steuereinrichtung ein Signal abgibt, wenn der Kipperteil die Ladeposition bzw. Entladeposition erreicht. Die Steuereinrichtung stoppt dann den Zuführantrieb.

Aus Sicherheitsgründen ist bevorzugt der Ladeposition und der Entladeposition je ein, ebenfalls einen Sensor bildender Notendschalter zugeordnet, welcher ebenfalls mit der Steuereinrichtung verbunden ist. Die Steuereinrichtung löst einen Nothalt des Zuführantriebs beziehungsweise des Kippantriebs aus, falls das Kipperteil den Arbeitsbereich überschreitet und dabei den betreffenden Notendschalter betätigt.

Bevorzugt weist die Schüttgut-Zuführvorrichtung bzw. die Kippvorrichtung ein mit der Steuereinrichtung verbundenes Sicherheitslichtgitter auf. Dieses ist bevorzugt im Beladebereich der Kippvorrichtung angeordnet. Erkennt das Sicherheitslichtgitter ein Hindernis, gibt es ein entsprechendes Signal an die Steuereinrichtung ab, welche den Zuführantrieb bzw. den Kippantrieb sicher stoppt.

Die Kippvorrichtung ist bevorzugt derart ausgeführt, dass bei sich in Ladeposition befindlichem Kipperteil ein Transportbehälter mit Gegenständen in das schwenkbare Kipperteil eingefahren oder ein leerer Transportbehälter aus diesem entnommen werden kann. Dies erfolgt zumeist mit Flurfördermitteln, z.B. mit Gabelstaplern.

Zum Leeren des Transportbehälters wird das Kipperteil zusammen mit dem von diesem aufgenommenen Transportbehälter in die Entladeposition geschwenkt, in welcher die Teile aus dem Transportbehälter in den Silo befördert beziehungsweise geschüttet werden.

Die Vereinzelungsanlage kann ausgebildet sein, wie dies beispielsweise in den Dokumenten EP 2 441 708 A1, WO 2010/006461 A1, WO 2010/006462 A1 und WO 2011/069268 A1 offenbart ist.

Die Vereinzelungsanlage, welche bevorzugt als Rollensortierer ausgebildet ist, weist bevorzugt einen mit der Steuereinrichtung verbundenen Maximumsensor auf, welcher bevorzugt in einem stromaufwärts liegenden Endbereich der Vereinzelungsanlage, gegebenenfalls in einem Abstand zum Fördertrichter, angeordnet ist. Gibt der Maximumsensor der Steuereinrichtung ein Maximumsignal ab, stoppt diese den Förderantrieb und gegebenenfalls den Bandantrieb des Siloförderbandes.

Der Maximumsensor stellt fest, ob eine Vereinzelungsanlage beziehungsweise eine Ausrichtstrecke der Vereinzelungsanlage mit Gegenständen bis zu seinem Detektionsbereich hin gefüllt ist oder nicht. Ist sie nicht gefüllt, kann die Fördereinrichtung weiter Gegenstände der Vereinzelungsanlage zuführen.

Weiter weist die Vereinzelungsanlage bevorzugt einen ebenfalls mit der Steuereinrichtung verbundenen Minimumsensor auf. Dieser ist bevorzugt in einem stromabwärts liegenden Endbereich der Vereinzelungsanlage bzw. der Ausrichtstrecke angeordnet. Gibt der Minimumsensor ein Minimumsignal an die Steuereinrichtung ab, erhöht diese die Geschwindigkeit des Vereinzelungsantriebs und gegebenenfalls des Förderantriebs und allenfalls des Bandantriebs.

Bevorzugt weist die Vereinzelungsanlage, bevorzugt etwa mittig der Ausrichtstrecke, und somit, falls vorhanden, zwischen dem Maximumsensor und dem Minimumsensor einen Normalsensor auf, welcher ebenfalls mit der Steuereinrichtung verbunden ist. Diese steuert die Geschwindigkeit des Vereinzelungsantriebs in Abhängigkeit des vom Normalsensor abgegebenen Normalsignals.

Der Normalsensor stellt beispielsweise fest, ob die Vereinzelungsanlage bzw. die Ausrichtstrecke vom stromabwärts liegenden Ende bis zum ihm mit Gegenständen aufgefüllt ist. Ist dies der Fall und stellt der allenfalls vorhandene Maximumsensor fest, dass die Vereinzelungsanlage bzw. die Ausrichtstrecke nicht bis zu seinem Detektionsbereich hin mit Gegenständen aufgefüllt ist, kann die Steuereinrichtung den Vereinzelungsantrieb mit konstanter Geschwindigkeit laufen lassen.

Stellt der Normalsensor beispielsweise fest, dass die Vereinzelungsanlage bzw. die Ausrichtstrecke bis zum ihm hin nicht mit Gegenständen aufgefüllt ist, steuert die Steuereinrichtung den Vereinzelungsantrieb derart an, dass dieser mit einer grösseren Geschwindigkeit arbeitet.

Bevorzugt ist der Vereinzelungsanlage eine Zuführschiene nachgeschaltet. Eine Zuführschiene bevorzugter Ausführungsform ist beispielsweise aus dem Dokument WO 2012/100357 A1 bekannt. Die Zuführschiene übernimmt von der Vereinzelungsanlage ausgerichtete und in einer Reihe hintereinander angeordnete Gegenstände und führt diese, üblicherweise in einem Gefälle an Schienen gleitend, der nachgeschalteten Weiterverarbeitungsanlage zu.

Die Zuführschiene kann jedoch auch als Horizontalschiene ausgebildet sein, entlang deren Schienen gleitend die ausgerichteten und hintereinander angeordneten Gegenstände mittels eines Luft- oder Riementriebs gefördert werden.

Bevorzugt weist die Zuführschiene in einem stromaufwärts liegenden, der Vereinzelungsanlage zugewandten Endbereich, einen mit der Steuereinrichtung verbundenen SchienenMaximumsensor auf. Beim Auffüllen der Zuführschiene mit ausgerichteten Gegenständen beim Anfahren der Vorrichtung gibt der Maximumsensor ein Schienenmaximumsignal an die Steuereinrichtung ab, wenn die Zuführschiene bis zum Maximumsensor hin mit Gegenständen aufgefüllt ist.

Die Steuereinrichtung gibt daraufhin ein Bereitschaftssignal an die Weiterverarbeitungsanlage ab. Dadurch wird sichergestellt, dass die gesamte Anlage zuverlässig angefahren werden kann.

Vielfach weisen Weiterverarbeitungsanlagen eine Einlaufeinheit auf, welcher die Zuführschiene die ausgerichteten Gegenstände zuführt. Die Einlaufeinheiten lassen beim Anfahren der Anlage meist erst dann ein Zuführen von Gegenständen zu, wenn die Weiterverarbeitungsanlage ein Bereitschaftssignal erhalten hat.

Es ist jedoch auch möglich, dass die Zuführschiene bei einem stromabwärts liegenden Ende eine Schleuse aufweist, welche zum Auffüllen der Zuführschiene mit ausgerichteten Gegenständen beim Anfahren der Vorrichtung die Abgabe von Gegenständen an die Weiterverarbeitungsanlage verhindert. In diesem Fall gibt die Steuereinrichtung die Schleuse frei, wenn sie vom Schienenmaximumsensor ein Schienenmaximumsignal erhalten hat. Dadurch wird sichergestellt, dass die gesamte Anlage zuverlässig angefahren werden kann.

Bevorzugt weist die Zuführschiene in einem stromabwärts liegenden Endbereich, gegebenenfalls stromaufwärts der Schleuse, einen mit der Steuereinrichtung verbundenen Schienenminimumsensor auf. Dieser gibt an die Steuereinrichtung ein Schienenminimumsignal ab, falls er feststellt, dass bei ihm keine Gegenstände vorhanden sind. Die Steuereinrichtung gibt in diesem Fall an die Weiterverarbeitungsanlage ein Stoppsignal ab, da nicht mehr zuverlässig Gegenstände zur Weiterverarbeitung im gewünschten Takt angeliefert werden können.

Bevorzugt weist die Vereinzelungsanlage ein von einem von der Steuereinrichtung gesteuerten Rückführantrieb angetriebenes Rückführband auf. Dieses ist dazu bestimmt, von der Vereinzelungsanlage ausgeschiedene Gegenstände mit falscher Ausrichtung entweder in den Silo oder zur Fördereinrichtung oder den Anfang der Vereinzelungsanlage zurück zu fördern.

In einer bevorzugten Ausführungsform weist die Kippvorrichtung einen Sicherheitsbolzen auf, mittels welchem das hochgeschwenkte Kipperteil am Herunterschwenken mechanisch gehindert werden kann. Dies beispielsweise zur Sicherheit, wenn eine Person unter dem Kipperteil Arbeiten erledigen muss. Bevorzugt ist beim Sicherheitsbolzen ein mit der Steuereinrichtung verbundener, einen Sensor bildender Schalter vorhanden, welcher bei aktivem Sicherheitsbolzen an die Steuereinrichtung ein entsprechendes Signal abgibt, welche den Motorenanlauf verhindert.

Die vorliegende Erfindung wird anhand eines in der Zeichnung dargestellten Ausführungsbeispiels näher erläutert.

Es zeigen rein schematisch:
- Fig. 1: in perspektivischer Darstellung eine Vorrichtung zum Beschicken einer Weiterverarbeitungsanlage mit als Schüttgut anfallenden Gegenständen mit einer als Kippvorrichtung ausgebildeten Zuführvorrichtung, einem Siloband, einer als Hochförderer ausgebildeten Fördereinrichtung, einer Vereinzelungsanlage sowie einer von dieser wegführenden Zuführschiene;
- Fig. 2: in Draufsicht und vereinfacht die Vorrichtung gemäss Fig. 1 mit den Antrieben und den Positionen von Sensoren; und
- Fig. 3: in Ansicht einen Vorformling zur Herstellung einer PET-Flasche.

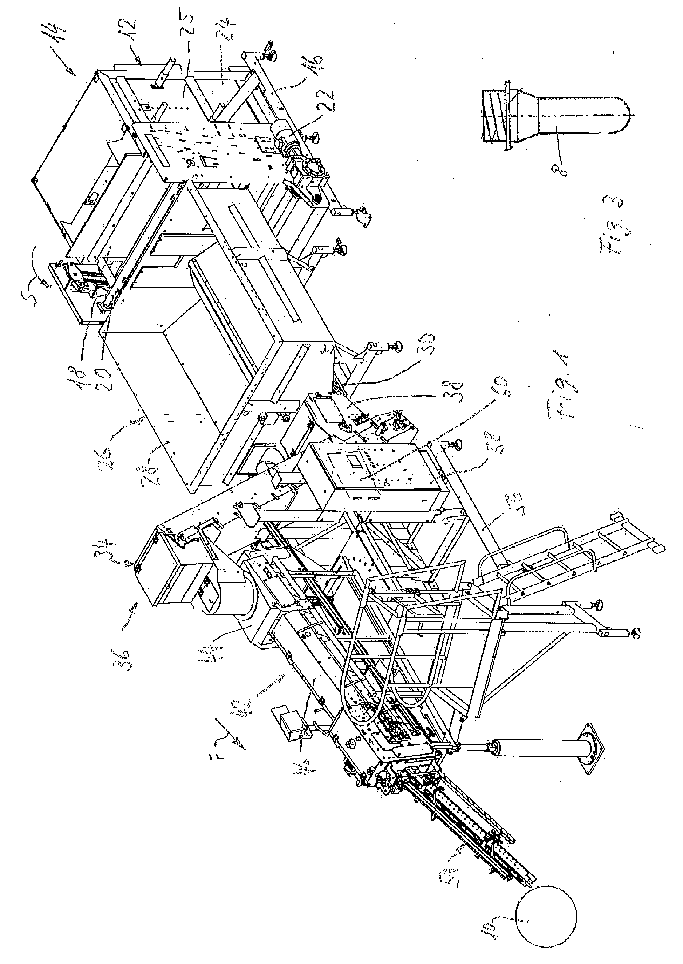

Die in der Fig. 1 gezeigte Vorrichtung ist dazu bestimmt, als Schüttgut in Transportbehältern angelieferte Gegenstände, im vorliegenden Fall Vorformlinge 8, auszurichten und hintereinander in einer Reihe angeordnet in der gewünschten Ausrichtung einer der Vorrichtung nachgeschalteten Weiterverarbeitungsanlage 10 zuzuführen. Diese ist symbolisch als Kreis dargestellt; im vorliegenden Fall handelt es sich um eine allgemein bekannte Streckblasmaschine zur Herstellung von PET-Flaschen aus den Vorformlingen 8. Vorformlinge sind allgemein bekannt, ein Beispiel eines Vorformlings 8 ist in Fig. 3 gezeigt.

Die Vorrichtung weist eine als Kippvorrichtung 12 ausgebildete Zuführvorrichtung 14 auf. An einem auf einem Boden oder einem Sockel befestigten rahmenartigen Gestell 16 ist ein Kipperteil 18 um eine horizontale Schwenkachse 20 schwenkbar gelagert. Am Gestell 16 ist ein Zuführantrieb 22 in Form eines elektrischen Getriebemotors befestigt, dessen Abtriebswelle mit dem Kipperteil 18 verbunden ist, um diesen von einer unteren, in der Fig. 1 gezeigten, Ladeposition 24 um die Schwenkachse 20 in Richtung des Pfeiles S in eine obere Entladeposition und wieder zurück zu schwenken.

Die Kippvorrichtung 12 ist beispielsweise gleich aufgebaut, wie dies im Dokument WO 2012/126129 A1 offenbart ist. Es sei ausdrücklich auf die Offenbarung in diesem Dokument verwiesen; wobei die dort gezeigte Abdeckung des Silos nicht notwendig ist jedoch vorhanden sein kann.

Der Kipperteil 18 ist dazu bestimmt, in Ladeposition 24 einen als Schüttgut mit Vorformlingen 8 beladenen Transportbehälter 25 - beispielsweise eine Kartonschachtel oder einen Gitterbehälter - aufzunehmen, wobei der Transportbehälter beispielsweise mittels eines Gabelstaplers in den Kipperteil 18 eingefahren werden kann.

In der Ladeposition 24 kann auch ein geleerter Transportbehälter 25 dem Kipperteil 18 entnommen werden.

Zum Entleeren des Transportbehälters 25 wird der Kipperteil 18, angetrieben vom den Zuführantrieb 22, aus der Ladeposition 24 in Schwenkrichtung S in die Entladeposition hochgeschwenkt, wodurch die Vorformlinge 8 durch ihr Eigengewicht aus dem Transportbehälter und somit dem Kipperteil 18 in ein der Kippvorrichtung 12 unmittelbar nachgeschalteten Silo 26 gleiten.

Beim vorliegenden Silo 26 handelt es sich um ein sogenanntes Siloband, wobei der Silo 26 einen Silobehälter 28 und ein Siloförderband 30 aufweist.

Im vorliegenden Fall ist der Boden des Silobehälters 28 durch vier ebene Platten gebildet, welche - im Querschnitt gesehen - W-förmig angeordnet sind. Zwischen den beiden seitlichen Platten und den mittleren Platten ist jeweils ein Durchlassspalt vorhanden, durch welchen Vorformlinge 8 nach unten auf das unter dem Silobehälter 28 geführte Siloförderband 30 gleiten können.

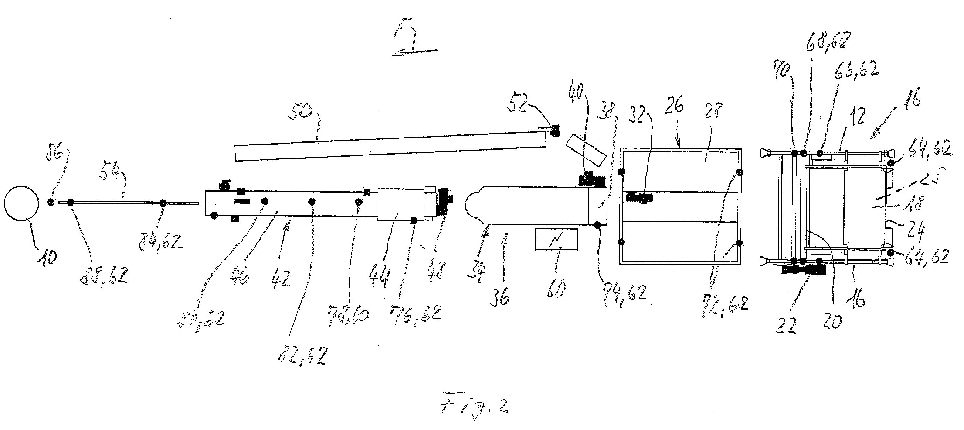

An einem Silogestell, welches den Silobehälter 28 und das Siloförderband 30 trägt, ist ein Bandantrieb 32 (siehe Fig. 2) angeordnet, welcher im vorliegenden Fall ebenfalls als elektrischer Getriebemotor ausgebildet ist und das als Bandförderer ausgebildete Siloförderband 30 antreibt.

Dem Silo 26 ist eine als Hochförderer 34 ausgebildete Fördereinrichtung 36 nachgeschaltet. Diese weist, wie dies beispielsweise aus dem Dokument WO 2012/126129 A1 bekannt ist, ein Transportband mit daran befestigten Transportstegen auf. Im untenliegenden Anfangsbereich der Fördereinrichtung 36 weist diese einen Aufnahmetrichter 38 auf, zu welchem das Siloförderband 30 die Vorformlinge 8 fördert. Im Aufnahmetrichter 38 nimmt das Förderband mit seinen Stegen Vorformlinge 8 mit und transportiert diese zum oberen und stromabwärts liegenden Ende des Hochförderers 34. Im Bereich des Hochförderers 34 weisen die Vorformlinge 8 eine beliebige Lage auf und es können eine unterschiedliche Anzahl von Vorformlingen 8 jeweils von einem Steg mitgenommen werden. Die Fördereinrichtung 36 bzw. der Hochförderer 34 ist mittels eines Förderantriebs 40 (siehe Fig. 2) ebenfalls in Form eines elektrischen Getriebemotors angetrieben.

Der Fördereinrichtung 36 ist direkt eine Vereinzelungsanlage 42 nachgeschaltet. Diese weist eingangsseitig einen Fördertrichter 44 auf, in welchen die vom Hochförderer 34 nach oben transportierten Vorformlinge 8 gleiten. Im gezeigten Ausführungsbeispiel handelt es sich um einen Rollensortierer, wie er beispielsweise aus den Dokumenten EP 1 925 575 A1 und EP 2 441 708 A1 bekannt ist.

Dem Fördertrichter 44 folgt, in Förderrichtung F, gesehen eine Ausrichtstrecke 46 bekannter Konstruktion, welche an die zu sortierenden Gegenstände angepasst ist. Rollensortierer enthalten in bekannter Art und Weise zwei Walzen bzw. Walzenreihen, die sich in einem axialen Abstand gegenüberliegen. In den Spalt zwischen den Walzen bzw. Walzenreihen können die auszurichtenden Vorformlinge 8 nur in einer bestimmten Ausrichtung eintreten und in diesem sind sie beispielsweise durch den üblicherweise bei Vorformlingen 8 vorhandenen Halsbund gegen ein Durchrutschen gesichert. Die Ausrichtstrecke verläuft zwischen ihrer Eingangsseite und ihrer Ausgangsseite schräg abwärts, so dass eine Schwerkraftunterstützung für das Ausrichten und das Fördern der Vorformlinge 8 gegeben ist.

Die Vereinzelungsanlage 42 bzw. im vorliegenden Fall eines Rollensortierers die zwei Walzen bzw. Walzenreihen sind von einem ebenfalls als elektrischer Getriebemotor ausgebildeten Vereinzelungsantrieb 48 angetrieben.

Im stromabwärts liegenden Endbereich weist die Vereinzelungsanlage 42 eine bekannte Ausschleusevorrichtung auf, mittels welcher nicht korrekt ausgerichtete Vorformlinge 8 ausgeschleust und in bekannter Art und Weise an ein Rückführband 50 (siehe Fig. 2) zugeführt werden. Das Rückführband ist mittels eines ebenfalls als elektrischer Getriebemotor ausgebildeter Rückführantrieb 52 angetrieben.

Das Rückführband führt im gezeigten Ausführungsbeispiel die ausgeschleusten Vorformlinge 8 zurück zum Aufnahmetrichter 38 der Fördereinrichtung 36, so dass sie erneut der Vereinzelungsanlage 42 zugeführt werden können.

Im gezeigten Ausführungsbeispiel folgt der Vereinzelungsanlage 42 eine in Förderrichtung F ein Gefälle aufweisende Zuführschiene 54, wie sie beispielsweise aus dem Dokument WO 2012/100357 A1 bekannt ist. Die in ihre gewünschte Lage ausgerichteten und hintereinander angeordneten Vorformlinge 8 werden von der Vereinzelungsanlage 42 an die Zuführschiene 54 übergeben, in welcher diese ausgerichtet und in einer Reihe aufeinander folgend zur Weiterverarbeitungsanlage 10 gleiten.

Am Maschinengestell 56, an welchem sowohl die Fördereinrichtung 36, als auch die Vereinzelungsanlage 42 angeordnet sind, ist weiter ein Steuerkasten 58 befestigt, in welchem sich eine Steuereinrichtung 60 mit einer programmierbaren Steuerung befindet.

Sämtliche Antriebe, so der Zuführantrieb 22, der Bandantrieb 32, der Förderantrieb 40, der Vereinzelungsantrieb 48 und der Rückführantrieb 52 sind von der einzigen Steuereinrichtung 60 der Vorrichtung angesteuert.

Wie dies im Zusammenhang mit der Fig. 2 zu erläutern ist, weist die Vorrichtung neben den mechanischen Komponenten und den Antrieben 22, 32, 40 48 und 52 auch eine Anzahl von Sensoren 62 auf, welche auch in Form von Schaltern vorhanden sein können. In der gezeigten Ausführungsform sind sämtliche Sensoren 62 mit der Steuereinrichtung 60 verbunden, welche aufgrund der betreffenden Sensorsignale die genannten Antriebe 22, 32, 40 48 und 52 ansteuert.

Im gezeigten Ausführungsbeispiel weist die Kippvorrichtung 12 beladeseitig ein Sicherheitslichtgitter 64 auf. Ist im Sicherheitslichtgitter 64 ein Hindernis vorhanden, führt das entsprechende, an die Steuereinrichtung 60 übermittelte Signal dazu, dass diese den Zuführantrieb 22 - im vorliegenden Fall den Antrieb zum Kippen des Kipperteils 18 - in seiner Bewegung sofort stoppt, beziehungsweise ein Schwenken verhindert.

Am Gestell 16 der Kippvorrichtung 12 ist ein der Ladeposition 24 des Kipperteils 18 zugeordneter erster Positionsschalter 66 und ein der Entladeposition zugeordneter zweiter Positionsschalter 68 befestigt. In seiner Ladeposition 24 betätigt der Kipperteil 18 den ersten Positionsschalter 66 und in der Entladeposition entsprechend den zweiten Positionsschalter 68. Die beiden Positionsschalter 66, 68 bilden Sensoren 62 und sind ebenfalls mit der Steuereinrichtung 60 verbunden.

Ist der Kipperteil 18 mit einem Transportbehälter 25 mit Vorformlingen 8 beladen und sind diese dem Silo 26 zuzuführen, steuert die Steuereinrichtung 60 den Zuführantrieb 22 derart an, dass er den Kipperteil 18 von der Ladeposition 24 um den Arbeitsbereich bis zur oberen Entladeposition schwenkt, wo der Kipperteil 18 den zweiten Positionsschalter 68 betätigt. Infolge des Signals dieses zweiten Positionsschalters 68 wird von der Steuereinrichtung 60 her der Zuführantrieb 22 abgeschaltet. Sind die Vorformlinge 8 in den Silo 26 abgegeben, steuert die Steuereinrichtung 60 den Zuführantrieb 22 in entgegengesetzter Richtung derart, dass der Kipperteil 18 , zusammen mit dem leeren Behälter 25 aus der oberen Entladeposition in die Ladeposition 24 nach unten geschwenkt wird. Ist diese Ladeposition 24 wieder erreicht, wird vom Kipperteil 18 der erste Positionsschalter 66 betätigt, dessen Signal die Steuereinrichtung 60 veranlasst, den Zuführantrieb 22 auszuschalten.

Der geleerte Transportbehälter 25 kann dann dem Kipperteil 18 entnommen werden, und dieser kann mit einem neuen, Vorformlinge 8 als Schüttgut enthaltenden weiteren Transportbehälter 25 beladen werden.

Benachbart zum ersten Positionsschalter 66 und zum zweiten Positionsschalter 68, jedoch ausserhalb des Arbeitsbereichs, ist am Gestell 16 weiter je ein Notendschalter 70 befestigt. Sollte der Kipperteil 18 infolge eines Fehlers ausserhalb den Arbeitsbereich schwenken, initiiert das Signal des entsprechenden, vom Kipperteil 18 betätigten Notendschalters 70 die Steuereinrichtung 60 zur Auslösung eines Notfalls der Kippvorrichtung 12.

Weiter kann das hochgeschwenkte Kipperteil 18 am Gestell 16 mittels eines Sicherheitsbolzens mechanisch am Herunterschwenken gehindert werden. Ein einen Sensor 62 bildender Schalter stellt fest, ob der Sicherheitsbolzen gesetzt ist oder nicht. Wenn ja, führt das von ihm an die Steuereinrichtung 60 abgegebenen Signal dazu, dass der Zuführantrieb 22 nicht angesteuert wird. Wenn nein, kann der Zuführantrieb 22 zum Schwenken des Kipperteils 18 angesteuert werden.

Dem Silo 26 sind zwei Füllstandniveausensoren 72 zugeordnet. Diese überwachen oberhalb der beiden durch die W-förmige Ausbildung des Bodens des Silos 26 erzeugten Silotälern den Füllstand des Silos 26 mit Vorformlingen 8.

Die Füllstandniveausensoren 72 sind ebenfalls mit der Steuereinrichtung 60 verbunden. Wird ein vorbestimmtes Füllstandniveau unterschritten, steuert die Steuereinrichtung 60 die Kippvorrichtung 12 derart an, dass ein mit Vorformlingen 8 gefüllter Transportbehälter 25 im Kipperteil 18 zum Auffüllen des Silos 26 in diesen entleert wird. Dies derart in einem Automatikbetreib beziehungsweise Automatikmodus.

Es ist auch möglich, in einem Handbetriebsmodus, das Kippen durch manuell abgegebene Signale zu steuern.

Der Hochförderer 34 weist in seinem Anfangsbereich, das heisst beim Aufnahmetrichter 38, einen Überfüllsensor 74 auf, welcher ebenfalls mit der Steuereinrichtung 60 verbunden ist. Stellt der Überfüllsensor 74 ein vorbestimmtes maximales Füllniveau des Aufnahmetrichters 38 mit Vorformlingen 8 fest, gibt er ein Überfüllsignal an die Steuereinrichtung 60 ab. Diese stoppt dann den Bandantrieb 32, sodass das Siloförderband 30 keine weiteren Vorformlinge 8 mehr der Fördereinrichtung 36, beziehungsweise dem Hochförderer 34 zuführt. Sinkt der Füllstand im Aufnahmetrichter 38 wieder unter ein bestimmtes Niveau ab, gibt der Überfüllsensor 74 ein entsprechendes Signal an die Steuereinrichtung 60 ab, welche den Bandantrieb 32 wieder ansteuert um erneut Vorformlinge 8 dem Hochförderer 34 zuzuführen.

Entsprechend weist die Vereinzelungsanlage 32 in ihrem Einlassbereich, im gezeigten Ausführungsbeispiel im Fördertrichter 44, einen Überfüllungssensor 76 auf. Stellt dieser ein vorbestimmtes Niveau von im Fördertrichter 44 vorhandenen Vorformlingen 8 fest, gibt er ein Überfüllungssignal an die Steuereinrichtung 60 ab. Diese stoppt den Förderantrieb 40, sodass der Hochförderer 34 vorübergehend keine weiteren Vorformlinge 8 der Vereinzelungsanlage 42 zuführt. Fällt das Niveau von Vorformlingen 8 im Fördertrichter 44 wieder unter ein bestimmtes Niveau, führt das entsprechende Signal des Überfüllungssensors 76 in der Steuereinrichtung 60 dazu, dass diese den Förderantrieb 40 wieder in Gang setzt, um erneut Vorformlinge 8 der Vereinzelungsanlage 42 zuzuführen.

Entsprechend wie der Förderantrieb 40 steuert die Steuereinrichtung aufgrund der Signale des Überfüllungssensors 76 auch den Bandantrieb 32.

Die Vereinzelungsanlage 42 weist stromabwärts des Fördertrichters 44, jedoch in dessen Nähe einen Maximumsensor 78 auf. Dieser ist im aufwärts liegenden Endbereich der Ausrichtstrecke 46 angeordnet und gibt an die Steuereinrichtung 60 ein Maximumsignal ab, falls die Ausrichtstrecke 46 vom stromabwärts liegenden Ende her bis zum Maximumsensor 78 hin mit Vorformlingen 8 gefüllt ist. Tritt ein Maximumssignal bei der Steuereinrichtung 60 ein, stoppt diese den Förderantrieb 40 und den Bandantrieb 32, sodass vorübergehend keine weiteren Vorformlinge 8 der Vereinzelungsanlage 42 zugeführt werden.

Weiter weist die Vereinzelungsanlage 42 in einem stromabwärts liegenden Endbereich, in einem Abstand zum Ende der Ausrichtstrecke, einen Minimumsensor 80 auf. Stellt dieser fest, dass in seinem Sensorbereich keine ausgerichteten Vorformlinge 8 mehr vorhanden sind, gibt er an die Steuereinrichtung ein Minimumsignal ab, worauf die Steuereinrichtung 60 die Geschwindigkeit des Vereinzelungsantriebs 48 erhöht, sodass die Vereinzelungsanlage 42, beziehungsweise deren Ausrichtstrecke 46 wieder mit ausgerichteten Vorformlingen 8 aufgefüllt wird.

Weiter weist die Vereinzelungsanlage 42 in ihrem Mittenbereich, das heisst zwischen dem Maximumsensor 78 und Minimumsensor 80, einen Normalsensor 82 auf. Dieser stellt fest, ob ausgerichtete Vorformlinge 8 in der Ausrichtstrecke 46 bis zu seinem Sensorbereich vorhanden sind. In Abhängigkeit von vom Normalsensor 82 an die Steuereinrichtung 60 abgegebenen Normalsignal steuert diese die Geschwindigkeit des Vereinzelungsantriebs 48.

In ihrem stromaufwärts liegenden Endbereich der Zuführschiene 54 ist dieser ein mit der Steuereinrichtung 60 verbundener Schienemaximumsensor 84 zugeordnet. Ist die Zuführschiene 54 - beim Anfahren der Vorrichtung - bis zum Schienemaximumsensor 84 hin mit ausgerichteten, aufeinanderfolgenden Vorformlingen 8 aufgefüllt, gibt der Schienemaximumsensor 84 ein Schienemaximumssignal an die Steuereinrichtung 60 ab, welche ein Bereitschaftssignal an die Weiterverarbeitungsanlage abgibt. Die Weiterverarbeitungsanlage kann daraufhin angefahren werden.

Alternativ kann die Führungsschiene 54 an ihrem stromabwärts liegenden Ende eine Schleuse 86 aufweisen. Diese ist dazu bestimmt, beim Anfahren der Vorrichtung und dem damit zusammenhängenden Auffüllen der Zuführschiene 54 mit ausgerichteten Vorformlingen 8 die Abgabe von Vorformlingen 8 an die Weiterverarbeitungsanlage 10 zu unterbinden, bis die Zuführschiene 54 bis zum Schienemaximumsensor 84 hin mit ausgerichteten, aufeinanderfolgenden Vorformlingen 8 aufgefüllt ist. Ist dies der Fall, gibt der Schienemaximumsensor 84 ein Schienemaximumssignal an die Steuereinrichtung 60 ab, welche die Schleuse 86 freischaltet, so dass Vorformlinge 8 nun der Weiterverarbeitungsanlage 10 zugeführt werden können.

Weiter ist der Zuführschiene 54 in einem stromabwärts liegenden Endbereich, gegebenenfalls stromaufwärts zur Schleuse 86, ein Schieneminimumsensor 88 zugeordnet, welcher an die Steuereinrichtung 60 ein Schieneminimumsignal abgibt, falls in seinem Sensorbereich keine Vorformlinge 8 vorhanden sind. In diesem Fall gibt die Steuereinrichtung 60 an die Weiterverarbeitungsanlage 10 ein Stoppsignal ab, sodass diese stillgelegt werden kann bis wieder Vorformlinge 8 zur Abgabe an die Weiterverarbeitungsanlage 10 bereitstehen.

Der Vollständigkeit halber sei erwähnt, dass die Schüttgut-Zuführvorrichtung 14 anstelle einer Kippvorrichtung 12 eine unterschiedliche Vorrichtung zu Zuführen von Schüttgut in den Silo 26 aufweisen kann. Der Silo 26 kann anstelle eines sogenannten Silobandes auch als "Silorucksack" ausgebildet sein. Ebenfalls brauchen die Fördereinrichtung 36 nicht zwingend als Hochförderer 34 und die Vereinzelungsanlage 42 nicht als Rollensortierer ausgebildet zu sein. Entsprechend unterschiedliche Ausführungsformen, welche die gleiche Aufgabe erfüllen, sind allgemein bekannt.

Es sei auch erwähnt, dass anstelle vom Getriebemotoren der Antriebe auch Hydraulikantriebe verwendet werden können.

## Patentansprüche

1. Vorrichtung zum seriellen Beschicken einer Weiterverarbeitungsanlage mit als Schüttgut anfallenden Gegenständen, mit einer einen Zuführantrieb (22) aufweisenden Schüttgut-Zuführvorrichtung (14), einem Silo (26), welchem mittels der Schüttgut-Zuführvorrichtung (22) die Gegenstände (8) als Schüttgut zuführbar sind, einer mit dem Zuführantrieb (22) verbundenen Steuereinrichtung (60), welche den Zuführantrieb (22) ansteuert um den Silo (26) mit Gegenständen nachzufüllen, einer dem Silo (26) nachgeschalteten, einen Förderantrieb (40) aufweisenden Fördereinrichtung (36) und einer einen Vereinzelungsantrieb (48) aufweisenden Vereinzelungsanlage (42), wobei die Fördereinrichtung (36) Gegenstände (8) vom Silo (26) ungeordnet der Vereinzelungsanlage (42) zuführt und letztere die ihr zugeführten Gegenstände (8) ausrichtet und die ausgerichteten Gegenstände in Richtung zur Weiterverarbeitungsanlage (10) weiterfördert, **dadurch gekennzeichnet, dass** die Fördereinrichtung (36) und die Vereinzelungsanlage (42) mit der Steuereinrichtung (60) verbundene Sensoren (62) aufweist und die einzige Steuereinrichtung (60) auch den Förderantrieb (40) und den Vereinzelungsantrieb (48) steuert.

2. Vorrichtung nach Anspruch 1, **dadurch gekennzeichnet, dass** dem Silo (26) ein mit der Steuereinrichtung (60) verbundener Füllstandniveausensor (72) zugeordnet ist und die Steuereinrichtung (60) den Zuführantrieb (22) in Abhängigkeit vom mit dem Füllstandniveausensor (72) ermittelten Füllstand des Silos (26) ansteuert.

3. Vorrichtung nach Anspruch 1 oder 2, **dadurch gekennzeichnet, dass** der Silo (26) einen Silobehälter (28) und ein von einem von der Steuereinrichtung (60) gesteuerten Bandantrieb (32) angetriebenes Siloförderband (30) aufweist, wobei das Siloförderband (30) Gegenstände (8) vom Silobehälter (28) zur Fördereinrichtung (36) fördert.

4. Vorrichtung nach Anspruch 3, **dadurch gekennzeichnet, dass** die vorzugsweise als Hochförderer (34) ausgebildete Fördereinrichtung (36) in ihrem Anfangsbereich einen mit der Steuereinrichtung (60) verbundenen Überfüllsensor (74) aufweist und die Steuereinrichtung (60) bei einem Überfüllsignal des Überfüllsensors (74) den Bandantrieb (32) stoppt.

5. Vorrichtung nach einem der Ansprüche 1 bis 4, **dadurch gekennzeichnet, dass** die Vereinzelungsanlage (42) in ihrem Einlassbereich einen mit der Steuereinrichtung (60) verbundenen Überfüllungssensor (76) aufweist und die Steuereinrichtung (60) bei einem Überfüllungssignal des Überfüllungssensors (76) den Förderantrieb (40) und gegebenenfalls den Bandantrieb (32) stoppt.

6. Vorrichtung nach einem der Ansprüche 1 bis 6, **dadurch gekennzeichnet, dass** die Schüttgut-Zuführvorrichtung (14) eine Kippvorrichtung (12) mit einem von vom Zuführantrieb (22) angetriebenen, schwenkbaren Kipperteil (18) aufweist, der Zuführantrieb (22) von der Steuereinrichtung (60) gesteuert das Kipperteil (18) in einem Arbeitsbereich zwischen einer unteren Ladeposition (24) und einer oberen Entladeposition hin und her schwenkt, der Ladeposition (24) und der Entladeposition je ein mit der Steuereinrichtung (60) verbundener Positionsschalter (66, 68) zugeordnet ist und die Steuereinrichtung (60) den Zuführantrieb (22) stoppt, wenn das Kipperteil (18) den betreffenden Positionsschalter (66, 68) betätigt.

7. Vorrichtung nach Anspruch 6, **dadurch gekennzeichnet, dass** der Ladeposition (24) und der Entladeposition je ein mit der Steuereinrichtung (60) verbundener Notendschalter (70) zugeordnet ist und die Steuereinrichtung (60) einen Nothalt des Zuführantriebs (22) auslöst, wenn das Kipperteil (18) den Arbeitsbereich überschreitet und dabei den betreffenden Notendschalter (70) betätigt.

8. Vorrichtung nach einem der Ansprüche 1 bis 7, **dadurch gekennzeichnet, dass** die Schüttgut-Zuführvorrichtung (14), gegebenenfalls die Kippvorrichtung (12), ein mit der Steuereinrichtung (60) verbundenes Sicherheitslichtgitter (64) aufweist, und die Steuereinrichtung (60) den Zuführantrieb (22) stoppt, wenn das Sicherheitslichtgitter (64) ein Hindernis feststellt.

9. Vorrichtung nach einem der Ansprüche 1 bis 8, **dadurch gekennzeichnet, dass** die Vereinzelungsanlage (42) einen mit der Steuereinrichtung (60) verbundenen Maximumsensor (78) aufweist und die Steuereirichtung (60) bei einem Maximumsignal des Maximumsensors (78) den Förderantrieb (40) und vorzugsweise gegebenenfalls den Bandantrieb (32) stoppt.

10. Vorrichtung nach einem der Ansprüche 1 bis 9, **dadurch gekennzeichnet, dass** die Vereinzelungsanlage (42) einen mit der Steuereinrichtung (60) verbundenen Minimumsensor (80) aufweist und die Steuereirichtung (60) bei einem Minimumsignal des Minimumsensors (80) die Geschwindigkeit des Vereinzelungsantriebs (48) und vorzugsweise des Förderantriebes sowie gegebenenfalls des Bandantriebs erhöht.

11. Vorrichtung nach einem der Ansprüche 1 bis 10, **dadurch gekennzeichnet, dass** die Vereinzelungsanlage (42) einen mit der Steuereinrichtung (60) verbundenen Normalsensor (82) aufweist und die Steuereirichtung (60) die Geschwindigkeit des Vereinzelungsantriebs (48) und vorzugsweise des Förderantriebes sowie gegebenenfalls des Bandantriebs in Abhängigkeit eines Normalsignals des Normalsensors (82) regelt.

12. Vorrichtung nach einem der Ansprüche 1 bis 11, **dadurch gekennzeichnet, dass** der Vereinzelungsanlage (42) eine Zuführschiene (54) nachgeschaltet ist, welcher die Vereinzelungsanlage (42) die Gegenstände (8) hintereinander und ausgerichtet zuführt und welche die Gegenstände (8) an die Weiterverarbeitungsanlage (10) weiterleitet.

13. Vorrichtung nach Anspruch 12, **dadurch gekennzeichnet, dass** die Zuführschiene (54) in einem stromaufwärtsliegenden Endbereich einen mit der Steuereinrichtung (60) verbundenen Schienemaximumsensor (84) aufweist und die Steuereinrichtung (60) - beim Auffüllen der Zuführschiene mit ausgerichteten Gegenständen (8) - bei einem Schienemaximumsignal ein Bereitschaftssignal an die Weiterverarbeitungsanlage (10) abgibt.

14. Vorrichtung nach Anspruch 12 oder 13, **dadurch gekennzeichnet, dass** Zuführschiene (54) in einem stromabwärtsliegenden Endbereich einen mit der Steuereinrichtung (60) verbundenen Schieneminimumsensor (88) aufweist und die Steuereinrichtung (60) bei einem Schieneminimumsignal des Schieneminimumsensors (88) an die Weiterverarbeitungsanlage (10) ein Stoppsignal abgibt.

15. Vorrichtung nach einem der Ansprüche 1 bis 14, **dadurch gekennzeichnet, dass** die Vereinzelungsanlage (42) ein von einem von der Steuereinrichtung (60) gesteuerten Rückführantrieb (52) angetriebenes Rückführband (50) aufweist, welches von der Vereinzelungsanlage (42) ausgeschiedene Gegenstände (8) mit falscher Ausrichtung in den Silo (26), zur Fördereinrichtung (36) oder den Anfang der Vereinzelungsanlage (42) zurückfördert.
